# EUROPEAN PATENT APPLICATION

(11) **EP 4 741 139 A1**
(43) Date of publication of application: **13.05.2026**
(21) Application number: 24211413.0
(22) Date of filing: 07.11.2024
(51) Int. Cl.: B29C 64/245, B29C 64/379, B29C 64/393, B33Y 40/20, B33Y 50/02, B29C 64/227

(54) **METHOD FOR PRINTING AND PRINTER**

(71) Applicant: Stick Tech OY, 20521 Turku (FI)
(72) Inventor: PRAKASH, Dhayakumar Rajan, 21110 Naantali (FI); KALPIO, Tomi, 20900 Turku (FI); KOSKI, Timo, 20810 Turku (FI); PRINSSI, Roosa, 20780 Kaarina (FI); SÄILYNOJA, Eija, 20660 Littoinen (FI)
(74) Representative: Laine IP Oy

(57) **Abstract**

a method for printing of an object with a printer, comprising printing the object (11) on a removal sheet (12) using a printing material; and bending the removal sheet to detach the printed object. The removal sheet is made of an elastomer having an inner bend radius of 50-800 % of the thickness of the removal sheet, as measured according to ISO 10619-1:2018, adapted method B.

## Description

### FIELD

The present invention relates to a method for printing of an object, comprising printing the object using a printing material. The present invention also relates to a printer comprising a printer head, and capable of carrying out the present method.

### BACKGROUND AND OBJECTS

Printing, such as three-dimensional printing, commonly called 3D printing, is nowadays a widely used manufacturing method in dentistry and other fields of medicine. Typically, once the object is printed, it needs to be removed from the printer, either using some mechanical means or by hand. These steps typically slow down the overall process.

An aim of the present invention is thus to provide a method that can be automated as far as possible, and that would need as little manual handling as possible. A further aim is to provide a printer capable of carrying out the present method. A yet further aim is to provide a method and apparatus where the finished object can be for example turned around at some point of the printing and continue printing on another side of the semi-finished object.

### SUMMARY OF THE INVENTION

The invention is defined by the features of the independent claims. Some specific embodiments are defined in the dependent claims.

According to an aspect, there is provided a method for printing of an object with a printer, comprising
- printing the object on a removal sheet using a printing material; and
- bending the removal sheet to detach the printed object;
wherein the removal sheet is made of an elastomer having an inner bend radius of 50-800 % of the thickness of the removal sheet, as measured according to ISO 10619-1:2018, adapted method B.

According to another aspect, there is provided a printer comprising a printer head; a removal sheet made of an elastomer having an inner bend radius of 50-800 % of the thickness of the removal sheet, as measured according to ISO 10619-1:2018, adapted method B; and means for bending the removal sheet.

### BRIEF DESCRIPTION OF THE DRAWINGS

Figures 1a-1c illustrate part of a printer according to a first embodiment.
Figures 2a and 2b illustrate a part of a printer according to a second embodiment.
Figure 3 illustrates a printer according to a third embodiment.
Figures 4a-4e illustrate partial side views of different removal sheets according to some embodiments.
Figures 5a and 5b illustrate as top view different removal sheets according to some further embodiments.
Figures 6a-6c illustrate as side view some removal sheets according to embodiments.
Figures 7a-7c illustrate different removal sheets according to some embodiments.
Figure 8 illustrates a part of a printer according to an embodiment.
Figure 9 illustrates a part of a printer according to another embodiment.
Figure 10 illustrates a part of a printer according to yet another embodiment.

### DETAILED DESCRIPTION

According to an aspect of the present invention, there is provided a method for printing of an object with a printer, comprising
- printing the object on a removal sheet using a printing material; and
- bending the removal sheet to detach the printed object;
wherein the removal sheet is made of an elastomer having an inner bend radius of 50-800 % of the thickness of the removal sheet, as measured according to ISO 10619-1:2018, adapted method B.

The present method is thus based on the principle that the object is printed on a flexible removal sheet made of an elastomer and detached from this removal sheet by bending the removal sheet. The present method does thus not need any other mechanical means for detaching the finished object, such as a robot grabble.

The bend radius, which is measured as the inside curvature, is the minimum radius one can bend a sheet without kinking it, damaging it, or shortening its life. The smaller the bend radius, the greater the material flexibility (as the radius of curvature decreases, the curvature increases). The bend radius is measured according to ISO 10619-1:2017, adapted method B. Indeed, the method B of ISO 10619-1:2017, while being designed for rubber and plastics hoses and tubing, can be used to derive the bend radius of the elastomer sheet. The measurement is carried out as in method B, using a test piece having a width equal to the width of the mandrel and a length adequate to provide a grip at each end in addition to a section which can be bent around the periphery of the mandrel (i.e. length as in method B). The inner bend radius is the radius at which the thickness of the elastomer sheet is reduced by 5 % compared to the original thickness, when the sheet is bent around the mandrel

The bend radius of the removal sheet is 50-800 % of its thickness. For example, the bend radius can be from 50, 60, 70, 80, 90, 100, 125, 150, 200, 250, 300, 350, 400, 450, 500, 550, 600, 650, 700 or 750 % of its thickness, up to 60, 70, 80, 90, 100, 125, 150, 200, 250, 300, 350, 400, 450, 500, 550, 600, 650, 700, 750 or 800 % of its thickness. The bend radius typically depends also on the manner the removal sheet is bent, such as whether the removal sheet is in the form of a conveyer belt or whether a pusher below the removal sheet is used to bend it to remove the printed object.

For example, in order to achieve sharp detachment, the inner bend radius can be 50-100 % of the thickness of the removal sheet, while for a more controlled detachment the inner bend radius can be 100-400 % of the thickness of the removal sheet. For more fragile printed object, and thus a more gentle detachment, the inner bend radius can be 400-800 % of the thickness of the removal sheet.

In the method, the removal sheet may be stationary during printing, or it may slowly move. For example, if the removal sheet is arranged in the form of a conveyer belt, or in a roll-to-roll form, it may move with such a speed that once the object is finished, the belt is bent, and the object detaches from the removal sheet. In this case, naturally also the nozzle of the printer also needs to be movable. Typically, the removal sheet is stationary during printing, and the nozzle moves along three axes. Once printing is ready, the removal sheet can be moved to detach the printed object.

According to an embodiment, the removal sheet is cooled or heated, compared to the surrounding temperature, during and/or after printing. The cooling or heating can be carried out for example using suitable arrangements underneath the removal sheet.

The present method may further comprise measuring a force of ejection when the printed object is detached. The force of ejection can be for example measured using a load cell or pressure required for inflate or deflate an indentation used in the printing. Further, it is possible to use force feedback sensors. Measuring the force of ejection allows monitoring the quality, such as whether the object is sufficiently cured (if curable printing material is used), and whether the printed object has been properly removed.

It is also possible to use a camera and either a human operator or a program configured to analyse the images of the camera, to check that the printed object has been properly removed.

In order to ensure good printing quality, it may be beneficial to use something to adhere the object to be printed on the removal sheet. This may be particularly useful if the object to be printed is broader at its upper end than at its lower end (when the lower end is printed first). The adhering could be achieved for example by using an adhesive or a thermoplastic polymer. The properties of these materials naturally need to be such that the finished object is detached from the removal sheet when it is bent.

According to an embodiment, the removal sheet is at least partially coated with an adhesive prior to printing the object, wherein a peeling strength of the adhesive is lower than a shear force caused by the bending of the removal sheet, the peeling strength being measured according to ISO 11339:2022 and the shear force being measured according to ISO 13445:2003. In this embodiment, the detachment occurs between the adhesive and the removal sheet. Another way to describe this situation is that a shear force caused by the bending of the removal sheet exceeds a contact force of the adhesive on the removal sheet. The adhesive can be selected from a group consisting of methyl methacrylate, ethyl methacrylate, n-butyl methacrylate, isobutyl methacrylate, 2-ethylhexyl methacrylate, cyclohexyl methacrylate, isobornyl methacrylate, tetrahydrofurfuryl methacrylate, benzyl methacrylate, morpholinoethyl methacrylate, diethylene glycol dimethacrylate, triethylene glycol dimethacrylate, diurethane dimethacrylate, 2,2-bis(4-(2-hydroxy-3-methacryloxy)phenyl)propane, acrylic acid, epoxy, bisphenol A-glycidyl methacrylate (bis-GMA), bisphenol A ethoxylate dimethacrylate (bis-EMA), urethane dimethacrylate (UDMA), trimethylolpropane ethoxylate triacrylate and mixtures thereof.

According to another embodiment, the removal sheet is at least partially coated with an adhesive prior to printing the object, wherein the peeling strength of the adhesive is lower than the peeling strength of the printing material, the peeling strengths being measured according to ISO 11339:2022. In this embodiment, the detachment occurs between the adhesive and the printed object. Another way to describe this situation is that a shear force caused by the bending of the removal sheet exceeds a contact force of the printed object on the adhesive. The adhesive can be selected from a group consisting of methyl methacrylate, ethyl methacrylate, n-butyl methacrylate, isobutyl methacrylate, 2-ethylhexyl methacrylate, cyclohexyl methacrylate, isobornyl methacrylate, tetrahydrofurfuryl methacrylate, benzyl methacrylate, morpholinoethyl methacrylate, diethylene glycol dimethacrylate, triethylene glycol dimethacrylate, diurethane dimethacrylate, 2,2-bis(4-(2-hydroxy-3-methacryloxy)phenyl)propane, acrylic acid, epoxy, bisphenol A-glycidyl methacrylate (bis-GMA), bisphenol A ethoxylate dimethacrylate (bis-EMA), urethane dimethacrylate (UDMA), trimethylolpropane ethoxylate triacrylate and mixtures thereof.

In the two above-mentioned embodiments, where an adhesive is used, the adhesive may be a curable or cross-linkable material, that is cured or cross-linked along with the first or few first layers of the object to be printed. It thus adheres both to the removal sheet and the object in a manner that allows the object to be printed to remain on the removal sheet during printing. The properties of the adhesive and the material for printing are selected such that the detachment occurs at the desired interphase.

According to yet another embodiment, the removal sheet is at least partially coated with a thermoplastic material prior to printing the object, the softening temperature of the thermoplastic material being lower than the softening temperature of the material of the printed object, and the method comprises heating the coating to its softening temperature when bending the removal sheet to detach the printed object. The printed object is thus detached when the coating material softens and thus the object can be detached when the removal sheet is bent. In this embodiment, the thermoplastic material is selected from polylactic acid, polycaprolactone, ethylene vinyl acetate, polyethylene glycol, polyvinyl alcohol, thermoplastic polyurethane, polyethylene terephthalate glycol, polybutylene adipate terephthalate, and polybutylene succinate. When a thermoplastic material is used, the printed object can be removed from the removal sheet under the combined action of bending and heat, which heat softens the adhesive but does not alter the properties of the printed object.

In the above embodiments using adhesive or a thermoplastic material as coating, the coating may be applied on the removal sheet by at least one nozzle or a slot die of the printer. The coating may be applied by a single nozzle or several nozzles, such as an array of nozzles. The coating may also be applied separately, before the printing process starts, by any known means.

When a coating is used and the curing is induced by any kind of light, it is preferred that the coating absorbs the light instead of reflecting and scattering it, in order to prevent premature curing.

The removal sheet is made of an elastomer, so that it can be easily bent to detach the printed object. The elastomer can be for example silicone, natural rubber (NR), styrene-butadiene rubber (SBR), ethylene-propylene-diene monomer (EPDM), nitrile rubber (NBR), butyl rubber (IIR), chloroprene rubber (CR), silicone rubber (Q), fluoroelastomer (FKM), polyurethane rubber (AU, EU), thermoplastic polyurethane (TPU), chlorosulfonated polyethylene (CSM), ethylene acrylic elastomer (AEM), perfluoroelastomer (FFKM), polyacrylic rubber (ACM), polychloroprene (CR), styrene-ethylene-butylene-styrene (SEBS), polyether block amide (PEBA), polysulfide rubber, vinyl methyl silicone rubber, liquid silicone rubber (LSR), epichlorohydrin rubber (ECO), ethylene-vinyl acetate rubber (EVM), polypropylene elastomer (PPE), fluorosilicone rubber (FVMQ), hydrogenated nitrile rubber (HNBR), polyether polyurethane (PU), thermoplastic polyester elastomer (COPE), acrylic rubber (ACM), ether-based polyurethane, ester-based polyurethane, silicone-polyether block copolymers.

The removal sheet has a thickness that makes it suitable for the present method. For example, its thickness may be 0.1-10 mm. Thinner sheets are easier to bend but might be less durable, whereas thicker sheets are more durable but less flexible. Preferably, the thickness of the sheet is 0.1-5 mm. The thickness of the removal sheet may be for example from 0.1, 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5 or 9 mm up to 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5 or 10 mm.

According to an embodiment, the removal sheet comprises at least one indentation, and the removal sheet has a compression set of less than 30 % when measured according to ISO 815-1:2019 at a temperature of 23 °C ± 2 °C. Such compression set is believed to ensure that the indentation recovers to its original form after deformation. In this embodiment, the indentation is typically not in the form of the object to be printed (i.e. it is not a mould), but rather has larger dimensions than the object to be printed. The removal sheet may comprise one, two, three, four, five or more such indentations.

Using a removal sheet with at least one indentation can have the advantage that the indentation provides support in more than one direction, and thus the printing process may be more easily controlled. It may also assist in ejection of the printed object.

The at least one indentation may have a geometry selected from a group consisting of triangular, square, semi-circular, semi-elliptical, and a wave-form. By wave-form it is meant a form comprising multiple indentations arranged in an alternating up-and-down pattern. Preferably, all indentations have the same shape and size. The geometry of the indentation can be for example selected based on at least one of thickness of the removal sheet, surface area of the first layer of the object to be printed, geometry (i.e. shape and size) of the object to be printed object, and desired ejection characteristics.

For example, when triangular indentations are used, typically a lower bend radius of the removal sheet is needed, compared to semi-circular indentations. For applications requiring higher bending radius, semi-circular or semi-elliptical protrusions may be preferable. The wave-form may provide enhanced stability during printing, controlled ejection characteristics, better return-to-position properties, more uniform force distribution and/or reduced stress on the elastomer sheet.

The indentation, when used, is preferably at least partially filled with a material capable of at least one of providing support and creating an oxygen inhibition layer on the object to be printed. Indeed, it is for example to fill the bottom of the indentation with such functional material. Alternatively or additionally, when the object is printed inside the indentation, the surroundings of the object is also filled with the functional material. For example, it may be preferred to apply, while printing, an oxygen inhibition layer on the surface of the printed object, to prevent oxidation of the surface of the printed object. When such oxygen inhibition layer is used, the printed object can more easily be for example attached to another object, or the printed object can be put in another position, and further part(s) printed thereon. If the surface of the printed object has not been oxidised, further layer(s) attach to it in a more predictable manner, and the interface is stronger than if the surface has been in contact with oxygen.

The at least one indentation may also be partially filled with a release agent and/or a thermal control material.

The material capable of at least one of providing support and creating an oxygen inhibition layer on the object to be printed can be for example a gel or a solvent (which does not dissolve the printed object). Some examples of suitable materials include glycerine, vaseline, water-soluble cellulose films, and waxes such as paraffin wax.

The removal sheet may also comprise more than one printing zone, each printing zone having a different indentation pattern for printing different types of objects.

It is also possible to use in the printing material an increased amount of initiator at its surface layer, which would allow the surface to cure at a faster rate and thus for the object to be printed to be removed more quickly.

It is thus possible to at least partially print the object within the indentation. The object may also be printed fully within the indentation, if this is desired.

For removal of the printed object, the protrusion can be for example pushed, which bends the removal sheet.

The outer surface of the object being printed may also be protected against oxygen by using nitrogen gas, i.e. by purging the area with nitrogen gas.

In the present method, an object is printed. According to an embodiment, the object is made of a curable resin, and the curing of the printed object is carried out using ultraviolet light, infrared light, thermal curing or chemical curing, including ionic curing.

According to an embodiment, curing is carried out using ultraviolet light or infrared light, and the removal sheet is transparent or translucent to the used light. Thus, the curing can be also induced from below the removal sheet, to ensure appropriate curing in case of for example hollow objects.

When any kind of light is used for curing, it is preferred that the removal sheet does not reflect light, in order to prevent premature curing due to scattered light. Thus, the removal sheet should preferably absorb the light used for curing.

The present description also relates to a printer comprising a printer head; a removal sheet made of an elastomer having an inner bend radius of 50-800 % of the thickness of the removal sheet, as measured according to ISO 10619-1:2018, adapted method B; and means for bending the removal sheet. The present printer is suitable for carrying out the method described above and the variants and embodiments described above apply *mutatis mutandis* to the printer. The printer head can be any type of printer head suitable for printing objects and may comprise for example a nozzle or an array of nozzles for delivering the printing material.

According to an embodiment, the removal sheet may be arranged on a non-flexible support, if need be, depending on the size and weight of the object to be printed. The non-flexible support can be made for example from glass or polyacrylate.

The removal sheet may be in the form of a sheet, or it may be in the form of a conveyer belt. In case a conveyer belt is used, the printed object is detached when the belt reaches its turning point and bends.

In case the removal sheet is in a sheet form, the printer may further comprise a support for the removal sheet, which support has an opening arranged at a location on which an object is configured to be printed on the removal sheet, and the means for bending the removal sheet is a movable protrusion arranged in the opening and configured to push the removal sheet to detach the printed object.

In another embodiment, the removal sheet is in a sheet form, and the means for bending the removal sheet is a roll arranged to bend the removal sheet, by moving underneath the removal sheet along a pre-defined trajectory.

While the present method and printer do not require any further means for detaching the printed object, such as robot grabble, it may comprise means for grasping a printed object when it is detached from the removal sheet, i.e. after it has been detached. from the removal sheet. Such means for grasping the printed object are then configured to turn the printed object and to position it on the removal sheet in a position that is different from a previous position. For example, the object could be turned upside down. This would allow making a finished object without having to manually handle the product in between printing steps.

According to an embodiment, the printer is a multidimensional printer. The printer can be for example configured to print in two, three, four, five, six or seven dimensions.

The printer may further comprise means for measuring the ejection force of the printed object. The means for measuring the ejection force can be for example a load cell arrange for example at a roll that is arranged below the removal sheet and used as the means for bending the removal sheet. Alternatively, the means for measuring the ejection force can be a pressure gauge, arranged to measure the pressure needed to inflate or deflate an indentation arranged in the removal sheet. Such means can also be combined with a camera equipped with image analysis software, to determine when the printed object is detached.

The printer may also comprise means for monitoring indentation deformation and/or means for controlling bending parameters based on measured forces. When the printer has a removal sheet comprising indentations, it may also comprise means for providing functional materials to the indentation(s), means for controlling filling of the indentation(s), and/or means for monitoring a level of a functional material.

The printer may still further comprise means for maintaining the printer, during printing, in a controlled environment.

The present method and printer can be used to print for example dental parts and appliances, such as crowns, bridges, surgical guides, dental models and orthodontic appliances.

### DETAILED DESCRIPTION OF THE DRAWINGS

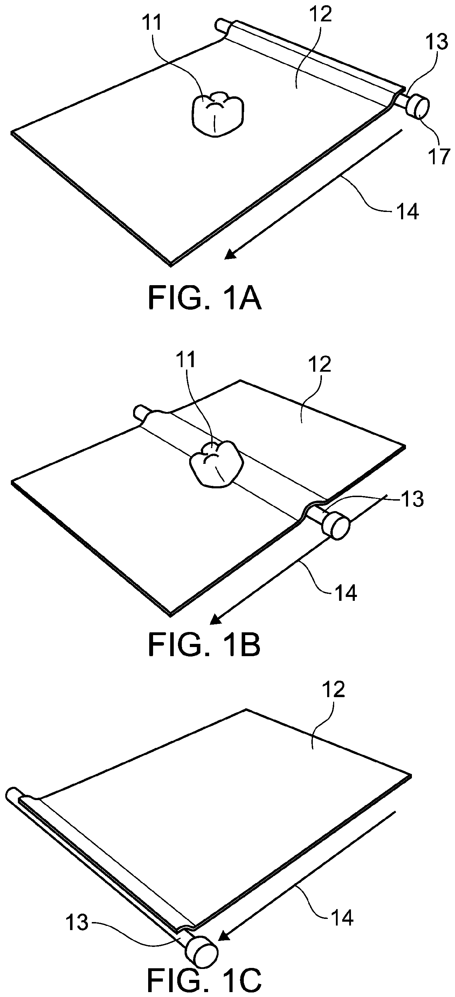

Figures 1a-1c illustrate part of a printer according to a first embodiment. In Figure 1a, an object 11, in this case a crown for a tooth, has been printed on a removal sheet 12. The means for bending the removal sheet 12 is in this embodiment a roll 13, that moves below the removal sheet 12 along a direction shown by the arrow 14. The roll 13 has a load cell 17 arranged at one of its ends, to measure the force of ejection of the printed object.

In Figure 1b, the roll 13 has moved to be underneath the object 11, and the object is partially detached from the removal sheet 12. In figure 1c, the roll 13 has reached the other end of the removal sheet 12, and the object 11 has been detached. For a next object printed on the removal sheet 12, the roll 13 can move to the opposite direction to detach the object.

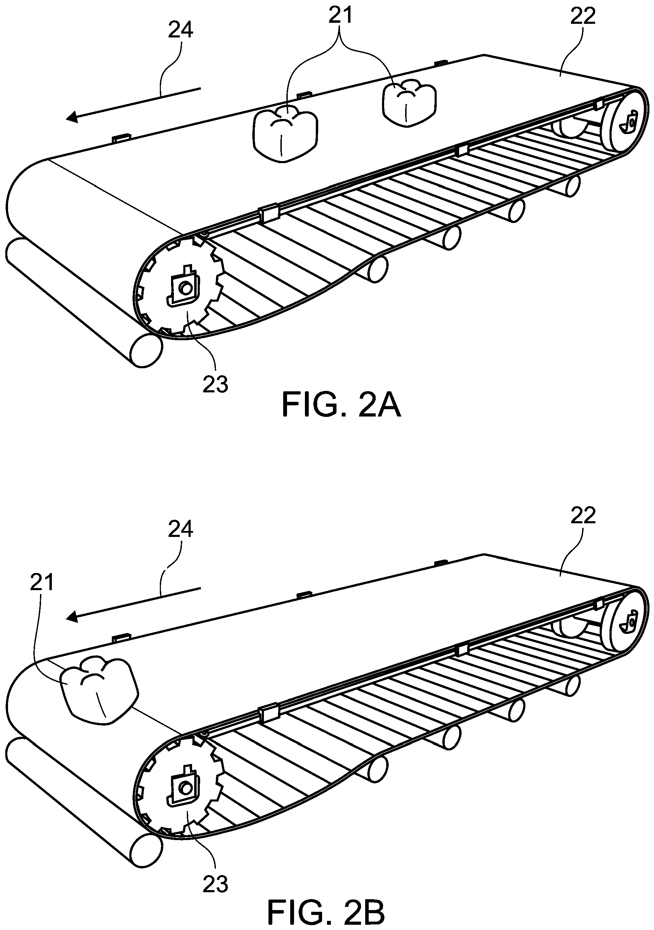

Figures 2a and 2b illustrate a part of a printer according to a second embodiment, in a schematic manner. In this embodiment, the removal sheet 22 is in the form of an endless conveyer belt, having at both ends a roll 23 to make the sheet turn, i.e. to reach its turning point. In Figure 2a, two objects 21 have been printed on the removal sheet 22. When the conveyer belt moves in the direction of the arrow 24 (counter clock wise in this case), the objects 21 also move. In Figure 2b, it can be seen that the left-most object has been detached and the right-most object will soon detach, once the removal sheet 22 moves further. In reality, the rolls 23 are significantly smaller than what is shown in the Figures, so that the bend radius of the removal sheet 22 is at most 800 % of the thickness of the removal sheet 22.

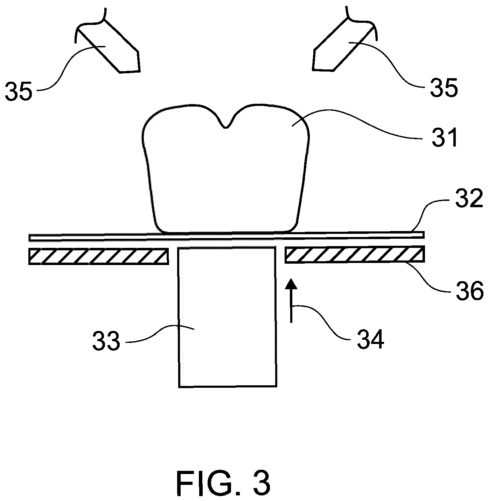

Figure 3 illustrates a printer according to a third embodiment. The printer comprises a removal sheet 32 and means for bending the removal sheet 33. Two printer heads 35, 35' are also shown. The printer heads have been used to print an object 31 on the removal sheet 32. The removal sheet 32 is arranged on a rigid support 36, which has an opening underneath the location on which the object 31 is printed. The means for bending the removal sheet 33 is in this embodiment a protrusion that is arranged to move up and down along the direction shown by arrow 34. When the protrusion is moved up, it bends the removal sheet 32, whereby the object 31 is detached. Thereafter, the protrusion 33 is moved down for a next object to be printed.

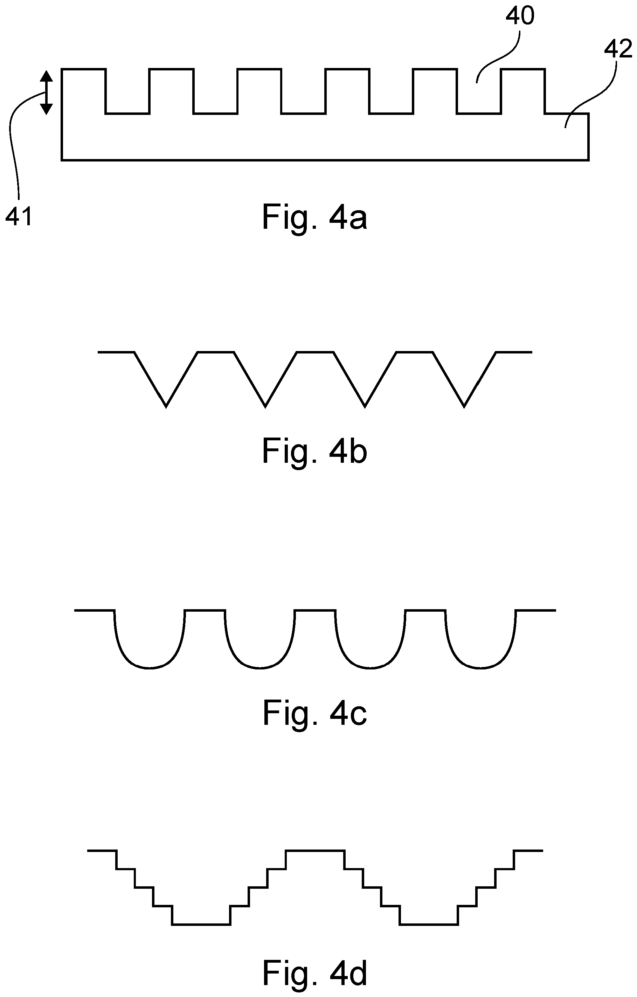

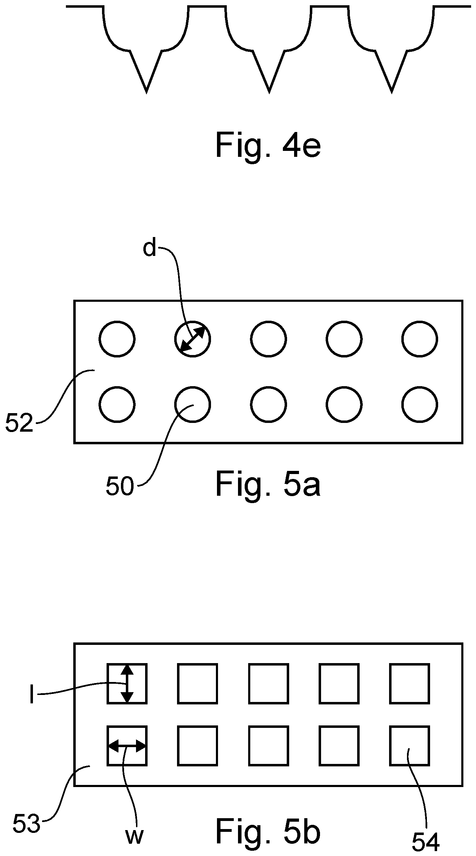

Figures 4a-4e illustrate partial side views of different removal sheets according to some embodiments. In Figure 4a, the removal sheet 42 has cylindrical indentations 40, which have a height h. Figures 4b to 4e illustrate as partial side views different shapes of the indentations, seen from the side. These indentations can be used for printing the object at least partially inside the indentation.

Figures 5a and 5b illustrate as top view different removal sheets according to some further embodiments. In the embodiment of Figure 5a, the removal sheet 52 has indentations 50, which have a diameter d. In the embodiment of Figure 5b, the cross-section of the indentations 54 of the removal sheet 53 have a shape of a square, having a length l and a width w.

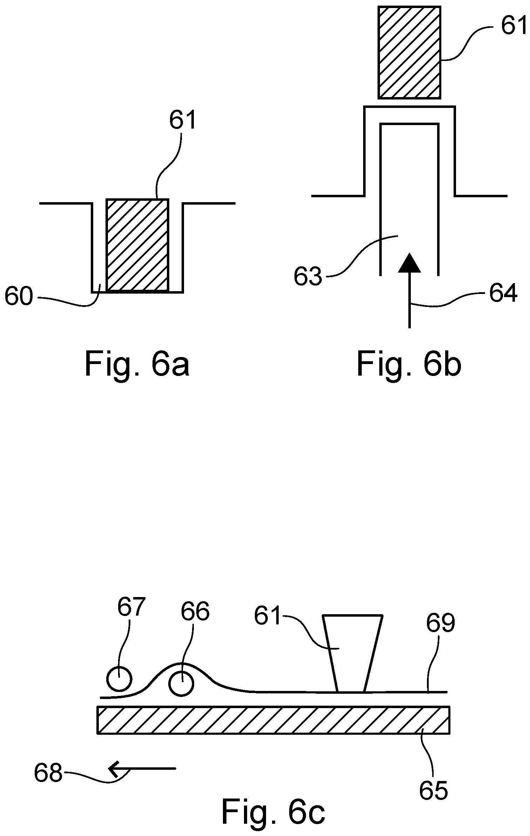

Figures 6a and 6b illustrate as side view a removal sheet according to an embodiment. In Figure 6a, an object 61 has been printed inside an indentation 60 of a removal sheet. Figure 6b illustrates the removal of the object 61, by pushing the bottom of the indentation, using a piston 63, moving in the direction of the arrow 64.

Figure 6c illustrates as a side view another removal sheet 69. The removal sheet 69 is arranged on a solid support 65, and an object 61 has been printed thereon. A first roll 66, moving in the direction of the arrow 68 bends the removal sheet 69 to detach the printed object 61. A second roll 67, moving in the same direction of the arrow 68, ensures that the removal sheet returns to its original, flat shape for the printing of another object.

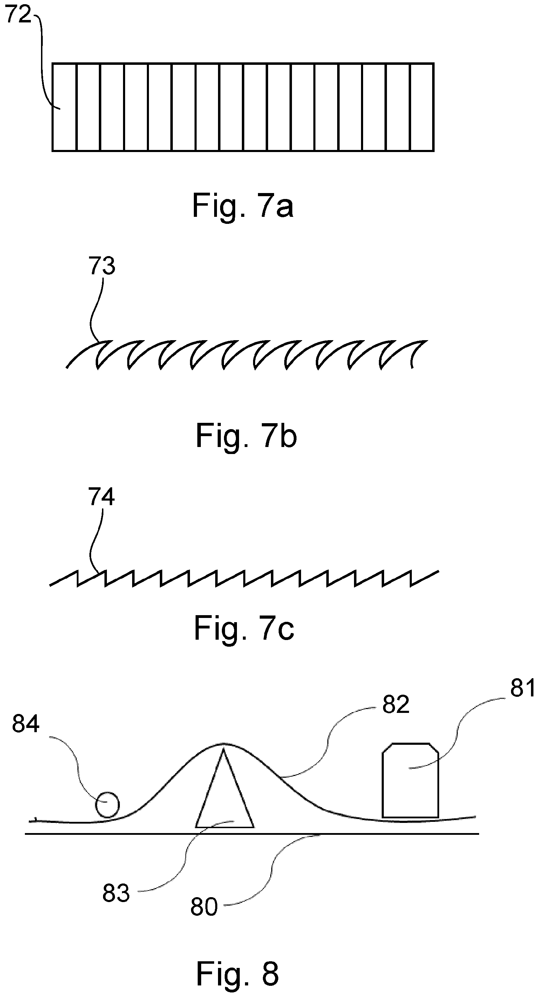

Figures 7a-7c illustrate different removal sheets according to some embodiments. Figure 7a shows a removal sheet 72 as a top view, showing a traction surface of the removal sheet 72. Figures 7b and 7c show two different options for the form of the traction surface, a wave-like form 73 providing uniform force distribution and controlled ejection characteristics and a triangular form 74 enabling sharp ejection with very low bend radius. The geometry of these protrusions is selected based on the specific requirements of the printing process, including the elastomer thickness, characteristics of the printed object, and desired ejection properties.

Figure 8 illustrates a part of a printer according to an embodiment. In this embodiment, the removal sheet 82 has been arranged on a solid support 80. An object 81 has been printed, and the removal sheet is moving towards a means for bending 83 of the removal sheet 82, which means is in this embodiment a form arranged between the solid support 80 and the removal sheet 82. A roll 84 is arranged downstream the means 83 to ensure that the removal sheet returns to its original position.

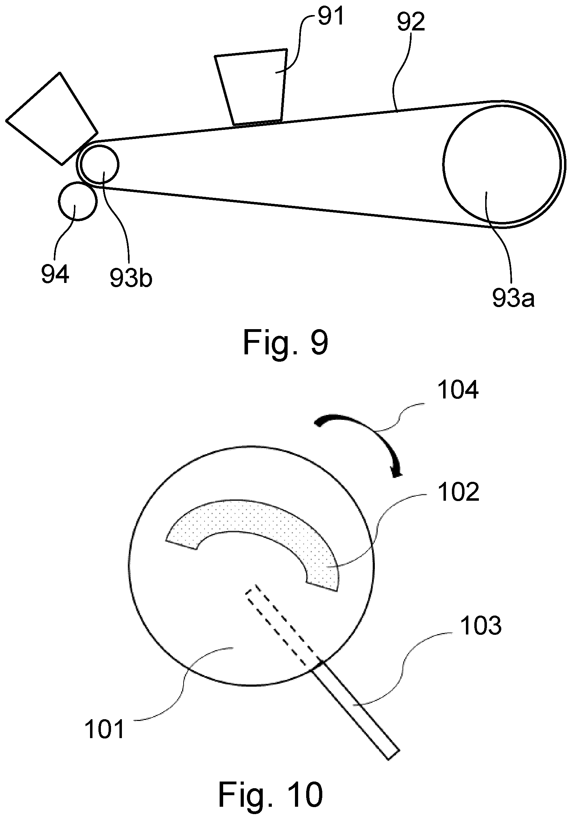

Figure 9 illustrates part of a printer according to another embodiment. In this embodiment, a conveyer belt 92 acts as the removal sheet for the printed objects 91, but the rolls 93a and 93b at the opposite ends of the conveyer belt are of different sizes. Additionally, a further roll 94 is arranged such that the conveyer belt 92 passes between the roll 93b and roll 94.

Figure 10 illustrates a part of a printer according to yet another embodiment. In this embodiment, the removal sheet 101 is in the form of a disc that is arranged to rotate in the direction of the arrow 104. This embodiment is particularly useful for printing larger objects 102, such as partial dentures. Once the object 102 has been printed and is ready to be detached, the removal sheet 101 is rotated, and a rod 103 arranged below the removal sheet 101 bends the removal sheet 101 and the printed object 102 is detached.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality.

### EXPERIMENTAL PART

The present method was tested as follows.

The removal sheet was made of silicone by mixing the two components of Zhermack Industrial Z22 Mould silicone (batch #0000316150) and pouring the mixture as a thin layer on Struers Waterproof SiC #4000, grain size 5 µm (batch PC3) grinding paper. After the silicone compound was polymerised, the sheet was peeled off the grinding paper.

Objects were 3D printed using a deposition-based 3D printer, Brinter ONE.

The print material consisted of the following components.

Urethane dimethacrylate (UDMA): Esschem X8507000, batch 819-340, as resin. Triethylene glycol dimethacrylat (TEGDMA): Aldrich 261548, batch STBF1113V, as resin.

Phenylbis (2,4,6-trimethylbenzoyl)-phosphine oxide (BAPO): Aldrich 511447, batch MKCN5782, as initiator.

N, N-dimethylaniline (DMA): Aldrich 234907, batch BCCC3073, as promoter.

Camphorquinone (CQ): Fluka 53960, batch BCBQ5255V, as initiator.

Schott Ultrafine G018-053 0.7 µm, batch SIL19491, as filler.

The print material was prepared by mixing UDMA/TEGDMA 80/20 -monomer mix, 0.7 wt-% CQ, 0.7 wt-% DMA and 0.05 wt-% HQ, in a magnetic stirrer. The filler was thereafter added to this resin mixture in a dual asymmetric centrifugal mixer (Hauschild SpeedMixer DAC 400.1 VAC-P). Different ratios of the resin mixture and filler were tested, namely 50/50, 40/60 and 30/70.

In a second test series, the same components, amounts and procedure were tested, except that BAPO instead of CQ.

Further, commercial resins, namely G-aenial^{™} Flo from GC International AG (ref 900711 230310A) in shades a1 and a4 shade were tested.

All tests proved that the printed object was effectively detached from the removal sheet, when the removal sheet was bent.

## Claims

1. A method for printing of an object with a printer, comprising
- printing the object on a removal sheet using a printing material; and
- bending the removal sheet to detach the printed object;
wherein the removal sheet is made of an elastomer having an inner bend radius of 50-800 % of the thickness of the removal sheet, as measured according to ISO 10619-1:2018, adapted method B.

2. The method according to claim 1, further comprising measuring a force of ejection when the printed object is detached.

3. The method according to claim 1 or 2, wherein the removal sheet is at least partially coated with an adhesive prior to printing the object, wherein a peeling strength of the adhesive is lower than a shear force caused by the bending of the removal sheet, the peeling strength being measured according to ISO 11339:2022 and the shear force being measured according to ISO 13445:2003.

4. The method according to claim 3, wherein the adhesive is selected from polylactic acid, polycaprolactone, ethylene vinyl acetate, polyethylene glycol, polyvinyl alcohol, thermoplastic polyurethane, polyethylene terephthalate glycol, polybutylene adipate terephthalate, and polybutylene succinate.

5. The method according to any of the preceding claims, wherein the removal sheet is made of silicone, natural rubber, styrene-butadiene rubber, ethylene-propylene-diene monomer, nitrile rubber, butyl rubber, chloroprene rubber, polyurethane rubber, thermoplastic polyurethane, chlorosulfonated polyethylene, ethylene acrylic elastomer, perfluoroelastomer, polyacrylic rubber, polychloroprene, styrene-ethylene-butylene-styrene, polyether block amide, polysulfide rubber, vinyl methyl silicone rubber, liquid silicone rubber, epichlorohydrin rubber, ethylene-vinyl acetate rubber, polypropylene elastomer, fluorosilicone rubber, hydrogenated nitrile rubber, polyether polyurethane, thermoplastic polyester elastomer, acrylic rubber, ether-based polyurethane, or ester-based polyurethane.

6. The method according to any of the preceding claims, wherein the removal sheet has a thickness of 0.1-10 mm.

7. The method according to any of the preceding claims, wherein the object is made of a curable resin, and the curing of the printed object is carried out using ultraviolet light, infrared light, thermal curing or chemical curing.

8. The method according to claim 7, wherein curing is carried out using ultraviolet light or infrared light, and the removal sheet is transparent or translucent to the used light.

9. The method according to any of the preceding claims, wherein the removal sheet comprises at least one indentation, and the removal sheet has a compression set of less than 30 % when measured according to ISO 815-1:2019 at a temperature of 23 °C ± 2 °C.

10. The method according to claim 9, further comprising at least partially filling the at least one indentation with a material capable of at least one of providing support and creating an oxygen inhibition layer on the object to be printed.

11. A printer comprising a printer head; a removal sheet made of an elastomer having an inner bend radius of 50-800 % of the thickness of the removal sheet, as measured according to ISO 10619-1:2018, adapted method B; and means for bending the removal sheet.

12. The printer according to claim 11, wherein the removal sheet is in the form of a conveyer belt.

13. The printer according to claim 11, further comprising a support for the removal sheet, which support has an opening arranged at a location on which an object is configured to be printed on the removal sheet, and the means for bending the removal sheet is a movable protrusion arranged in the opening and configured to push the removal sheet to detach the printed object.

14. The printer according to claim 11, wherein the means for bending the removal sheet is a roll arranged to bend the removal sheet.

15. The printer according to any of the claims 11-14, further comprising means for measuring the ejection force of the printed object.
